(19) Europäisches Patentamt
European Patent Office
Office européen des brevets

(11) **EP 4 439 722 A1**

(12) **EUROPEAN PATENT APPLICATION**
published in accordance with Art. 153(4) EPC

(43) Date of publication:
**02.10.2024 Bulletin 2024/40**

(21) Application number: **22922860.6**

(22) Date of filing: **29.01.2022**

(51) International Patent Classification (IPC):
**H01M 4/505** $^{(2010.01)}$    **H01M 4/36** $^{(2006.01)}$

(52) Cooperative Patent Classification (CPC):
**H01M 4/583; H01M 4/131; H01M 4/364;
H01M 4/366; H01M 4/505; H01M 4/525;
H01M 10/052; H01M 10/0525; H01M 10/0567;
H01M 10/0569; H01M 2004/021; H01M 2004/027;
H01M 2004/028; Y02E 60/10**

(86) International application number:
**PCT/CN2022/074938**

(87) International publication number:
**WO 2023/142029 (03.08.2023 Gazette 2023/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dongguan Amperex Technology
Limited
Dongguan City, Guangdong Province 523000
(CN)**

(72) Inventors:
• **LIU, Wenyuan**
  **Dongguan, Guangdong 523000 (CN)**
• **LANG, Ye**
  **Dongguan, Guangdong 523000 (CN)**

(74) Representative: **Icosa
83 avenue Denfert-Rochereau
75014 Paris (FR)**

(54) **POSITIVE ELECTRODE ACTIVE MATERIAL, ELECTROCHEMICAL DEVICE COMPRISING POSITIVE ELECTRODE ACTIVE MATERIAL, AND ELECTRONIC DEVICE**

(57)   This application provides a positive active material, an electrochemical device containing the positive active material, and an electronic device. The positive active material includes an element Mn and an element Al. A positive active material particle includes a first region close to a surface of the positive active material particle and a second region away from the surface of the positive active material particle. A molar ratio between Al and Mn in the first region is a1, the molar ratio between Al and Mn in the second region is a2, and the two molar ratios satisfy $1.1 \leq a1/a2 \leq 100$. The positive active material according to this application makes Al concentrate richly in the region close to the surface of the positive active material, thereby not only effectively alleviating dissolution of manganese on the positive electrode to improve cycle performance and storage performance of the electrochemical device, but also reducing a total content of Al in the positive active material to maintain a relatively high specific capacity of the positive electrode plate, and in turn, improving comprehensive performance of the electrochemical device.

FIG. 1

**Description**

**TECHNICAL FIELD**

This application relates to the field of electrochemistry, and in particular, to a positive active material, an electrochemical device containing the positive active material, and an electronic device.

**BACKGROUND**

Lithium-ion batteries are widely used in the fields such as wearable devices, smartphones, unmanned aerial vehicles, electric vehicles, and large-scale energy storage equipment by virtue of advantages such as a high energy density, a long cycle life, and no memory effect, and have become the most promising new green chemical power source in the world today. This imposes higher requirements on comprehensive performance of the lithium-ion batteries.

A positive active material in a lithium-ion battery is an important indicator that affects the performance of the lithium-ion battery. Lithium manganese oxide is widely used as a positive active material in the lithium-ion batteries. However, $Mn^{3+}$ in the lithium manganese oxide is prone to disproportionation. Consequently, $Mn^{2+}$ is dissolved out and then migrated to a negative electrode through an electrolytic solution to disrupt a solid electrolyte interface (SEI) and cause the loss of active lithium, thereby deteriorating cycle performance of the lithium-ion battery. In the related art, the improvement of the dissolution of $Mn^{2+}$ is usually accompanied by the fading of a specific capacity of a positive electrode and the deterioration of cycle performance or storage performance of an electrochemical device, and results in a decline of comprehensive performance of the electrochemical device.

**SUMMARY**

An objective of this application is to provide a positive active material, an electrochemical device containing the positive active material, and an electronic device to improve comprehensive performance of the electrochemical device.

A first aspect of this application provides a positive active material, including an element Mn and an element Al. A positive active material particle includes a first region close to a surface of the positive active material particle and a second region away from the surface of the positive active material particle. A molar ratio between Al and Mn in the first region is a1, the molar ratio between Al and Mn in the second region is a2, and the two molar ratios satisfy $1.1 \leq$ a1/a2 $\leq 100$, and preferably $5 \leq$ a1/a2 $\leq 90$. The a1/a2 ratio may be 1.1, 5, 10, 20, 30, 40, 50, 60, 70, 80, 90, 100, or any value falling within a range formed by any two thereof. The first region means a part that is of the positive active material particle and that is dissolved after being acid-washed with 2.4 mol/L sulfuric acid for 6 hours, and the second region means a part that is of the positive active material particle and that is not dissolved after being acid-washed with the 2.4 mol/L sulfuric acid for 6 hours.

As found by the inventor of this application, by controlling the ratio of the molar ratio a1 between Al and Mn in the first region to the molar ratio a2 between Al and Mn in the second region so that the a1/a2 ratio falls within the foregoing range, the Al in the positive active material is concentrated richly in the region close to the surface of the positive active material, thereby not only effectively alleviating dissolution of manganese on the positive electrode to improve cycle performance and storage performance of the electrochemical device, but also reducing a total content of Al in the positive active material to maintain a relatively high specific capacity of the positive electrode, and in turn, improving comprehensive performance of the electrochemical device.

Specifically, when the a1/a2 ratio is deficient (for example, less than 1.1), it indicates that the molar ratio of between Al and Mn in the first region is equivalent to that in the second region, or that the molar ratio of between Al and Mn in the first region is less than that in the second region. In other words, the Al in the positive active material concentrates richly inside the positive active material particle, thereby bringing an insignificant effect of alleviating dissolution of manganese on the positive electrode, and being adverse to improving the cycle performance and storage performance of the electrochemical device. With the gradual increase of the a1/a2 ratio, the Al in the obtained positive active material concentrates richly on the surface of the positive active material particle, thereby helping to maintain a relatively high specific capacity of the positive electrode on the basis of alleviating dissolution of manganese on the positive electrode. However, when the a1/a2 ratio is excessive (for example, greater than 100), that is, when the molar ratio a1 between Al and Mn in the first region is excessive, the total content of Al in the positive active material increases, thereby reducing the specific capacity of the positive electrode. Controlling the a1/a2 ratio to fall within the foregoing range helps to improve the cycle performance and storage performance of the electrochemical device concurrently, and keep a relatively high specific capacity of the positive electrode, thereby improving the comprehensive performance of the electrochemical device.

In some embodiments of this application, based on a mass of the positive active material, a mass percentage of Al in the first region is 0.01% to 0.5%. For example, the mass percentage of Al in the first region may be 0.01%, 0.05%, 0.1%, 0.2%, 0.3%, 0.4%, 0.5%, or any value falling within a range formed by any two thereof. Controlling the mass percentage of Al in the first region to fall within the foregoing range helps to keep a relatively high specific capacity of the positive electrode on the basis of alleviating dissolution of manganese on the positive electrode, thereby improving the comprehensive performance of the electrochemical device.

In some embodiments of this application, the positive active material is selected from lithium manganese oxide (LMO) containing the element Al.

In some embodiments of this application, the molar ratio $a1$ between Al and Mn in the first region is 1% to 30%, and preferably 5% to 30%, and/or the molar ratio $a2$ between Al and Mn in the second region is 0.05% to 5%. For example, the molar ratio $a1$ between Al and Mn in the first region may be 1%, 5%, 10%, 15%, 20%, 25%, 30%, or any value falling within a range formed by any two thereof. For example, the molar ratio $a2$ between Al and Mn in the second region may be 0.05%, 0.1%, 0.2%, 0.3%, 0.4%, 0.5%, or any value falling within a range formed by any two thereof.

When the molar ratio $a1$ between Al and Mn in the first region is deficient (for example, less than 1%), the cycle performance and storage performance of the electrochemical device are not improved because the dissolution of manganese on the positive electrode is not alleviated. In addition, the introduced Al decreases the specific capacity of the positive electrode to some extent. When the molar ratio $a1$ between Al and Mn in the first region is excessive (for example, greater than 30%), the total content of Al in the positive active material increases, thereby reducing the specific capacity of the positive electrode. When the molar ratio $a2$ between Al and Mn in the second region is deficient (for example, less than 0.05%) or excessive (for example, greater than 0.5%, the molar ratio is adverse to improving the cycle performance and storage performance of the electrochemical device. Controlling the molar ratio $a1$ between Al and Mn in the first region and/or the molar ratio $a2$ between Al and Mn in the second region to fall within the range specified herein helps to improve the cycle performance and storage performance of the electrochemical device concurrently, and keep a relatively high specific capacity of the positive electrode, thereby improving the comprehensive performance of the electrochemical device.

In some embodiments of this application, the positive active material satisfies at least one of conditions (a) to (c): (a) the molar ratio between Al and Mn in the positive active material is 0.1% to 10%, and preferably 2% to 10%; (b) the element Mn includes $Mn^{3+}$ and $Mn^{4+}$, and a ratio $e$ of the molar ratio between $Mn^{3+}$ and $Mn^{4+}$ in the first region to the molar ratio between $Mn^{3+}$ and $Mn^{4+}$ in the second region is 0.8 to 0.95; and (c) the positive active material further includes Li, a molar ratio between Li and Mn in the first region is $b1$, a molar ratio between Li and Mn in the second region is $b2$, and the two molar ratios satisfy $1 \leq b1/b2 \leq 2$, and preferably, $1.1 \leq b1/b2 \leq 2$. For example, the molar ratio between Al and Mn in the positive active material may be 0.1%, 0.5%, 1%, 2%, 3%, 4%, 5%, 6%, 7%, 8%, 9%, 10%, or any value falling within a range formed by any two thereof. For example, the value of $e$ may be 0.8, 0.83, 0.85, 0.87, 0.9, 0.92, 0.95, or any value falling within a range formed by any two thereof. For example, the value of $b1/b2$ may be 1, 1.1, 1.2, 1.4, 1.6, 1.8, 2, or any value falling within a range formed by any two thereof.

When the molar ratio between Al and Mn in the positive active material is deficient (for example, less than 0.1%), the effect in alleviating dissolution of manganese on the positive electrode is insignificant, and the effect in improving the cycle performance and storage performance of the electrochemical device is insignificant. When the molar ratio between Al and Mn in the positive active material is excessive (for example, greater than 10%), the specific capacity of the positive electrode decreases. Controlling the molar ratio between Al and Mn in the positive active material to fall within the foregoing range helps to improve the cycle performance and storage performance of the electrochemical device, and keep a relatively high specific capacity of the positive electrode, thereby improving the comprehensive performance of the electrochemical device.

In some embodiments of this application, based on the mass of the positive active material, the mass percentage of Al is 0.005% to 0.1%. For example, the mass percentage of Al in the positive active material may be 0.005%, 0.01%, 0.02%, 0.05%, 0.08%, 0.1%, or any value falling within a range formed by any two thereof. Controlling the mass percentage of Al in the positive active material to fall within the foregoing range helps to keep a relatively high specific capacity of the positive electrode on the basis of alleviating dissolution of manganese on the positive electrode, thereby improving the comprehensive performance of the electrochemical device.

In some embodiments of this application, based on the mass of the positive active material, the mass percentage of Mn is 1.0% to 1.2%. Controlling the mass percentage of Mn in the positive active material to fall within the foregoing range helps to keep a relatively high specific capacity of the positive electrode on the basis of alleviating dissolution of manganese on the positive electrode, thereby improving the comprehensive performance of the electrochemical device.

The ratio $e$ of the molar ratio between $Mn^{3+}$ and $Mn^{4+}$ in the first region to the molar ratio between $Mn^{3+}$ and $Mn^{4+}$ in the second region falls within the range specified herein, thereby helping to alleviate dissolution of manganese, and in turn, improving the cycle performance and storage performance of the electrochemical device. The molar ratio between $Mn^{3+}$ and $Mn^{4+}$ in the first region and the molar ratio between $Mn^{3+}$ and $Mn^{4+}$ in the second region are not particularly limited in this application, as long as the molar ratios satisfy the range of $e$. For example, the molar ratio between $Mn^{3+}$ and $Mn^{4+}$ in the first region is 15 % to 55%, and the molar ratio between $Mn^{3+}$ and $Mn^{4+}$ in the second

region is 30% to 70%.

The ratio of the molar ratio b1 between Li and Mn in the first region to the molar ratio b2 between Li and Mn in the second region, that is, the b1/b2 ratio, falls within the foregoing range, so that the molar ratio b1 between Li and Mn in the first region is greater than the molar ratio b2 between Li and Mn in the second region, thereby helping to improve the cycle performance of the electrochemical device and keep a relatively high specific capacity of the positive electrode.

In some embodiments of this application, the molar ratio b1 between Li and Mn in the first region is 58% to 98%, and the molar ratio b2 between Li and Mn in the second region is 55% to 60%. For example, the molar ratio b1 between Li and Mn in the first region may be 58%, 60%, 65%, 70%, 75%, 80%, 85%, 90%, 95%, 98%, or any value falling within a range formed by any two thereof; and the molar ratio b2 between Li and Mn in the second region may be 55%, 55.5%, 56%, 56.5%, 57%, 57.5%, 58%, 58.5%, 59%, 59.5%, 60%, or any value falling within a range formed by any two thereof. Controlling the molar ratio b1 between Li and Mn in the first region and/or the molar ratio b2 between Li and Mn in the second region to fall within the foregoing ranges helps to improve the cycle performance of the electrochemical device, and keep a relatively high specific capacity of the positive electrode.

In some embodiments of this application, the positive active material further includes an element M1. The element M1 includes at least one of Ni, Co, Nb, Mo, V, W, Zr, Mg, Ti, La, Y, or B. The positive active material satisfies at least one of conditions (d) to (e): d) a molar ratio between M1 and Mn is 0.1% to 5%; and (e) a molar ratio between Al and M1 is 1 to 10. For example, the molar ratio between M1 and Mn may be 0.1%, 0.5%, 1%, 1.5%, 2%, 2.5%, 3%, 3.5%, 4%, 4.5%, 5%, or any value falling within a range formed by any two thereof. For example, the molar ratio between Al and M1 may be 1, 1.5, 2, 2.5, 3, 3.5, 4, 4.5, 5, 6, 7, 8, 9, 10, or any value falling within a range formed by any two thereof.

The positive active material includes the element M1, and the molar ratio between M1 and Mn or the molar ratio between Al and M1 falls within the foregoing range, thereby helping to improve the storage performance of the electrochemical device and keep a relatively high specific capacity of the positive electrode.

In some embodiments of this application, the positive active material further includes an element M2. The element M2 includes F and/or S. Based on a mass of the positive active material, a mass percentage of the element M2 is 0.1% to 2%. For example, the mass percentage of the element M2 may be 0.1%, 0.3%, 0.5%, 0.8%, 1%, 1.2%, 1.5%, 1.8%, 2%, or any value falling within a range formed by any two thereof.

When the mass percentage of the element M2 is deficient (for example, lower than 0.1 %), the effect in improving the performance of the electrochemical device is insignificant. The increase in the mass percentage of the element M2 helps to improve the specific capacity of the positive electrode. However, when the mass percentage of the element M2 is excessive (for example, higher than 2%), the cycle performance of the electrochemical device is deteriorated. Controlling the mass percentage of the element M2 to fall within the foregoing range helps to improve the cycle performance of the electrochemical device and keep a relatively high specific capacity of the positive electrode.

In some embodiments of this application, the element M2 includes an element F. A molar ratio between F and Mn in the first region is d1, a molar ratio between F and Mn in the second region is d2, and the two molar ratios satisfy $3 \leq d1/d2 \leq 50$, and preferably $3 \leq d1/d2 \leq 25$. For example, the d1/d2 ratio may be 3, 5, 10, 15, 20, 25, 30, 35, 40, 45, 50, or any value falling within a range formed by any two thereof.

The element M2 introduced into the positive active material can improve the cycle performance of the electrochemical device, but an excessive dosage of the element M2 affects the specific capacity of the positive electrode. By controlling the d1/d2 ratio within the range specified herein, the molar ratio d1 between F and Mn in the first region is greater than the molar ratio d2 between F and Mn in the second region. In other words, the element F concentrates richly in a region close to the surface of the positive active material, thereby maintaining a relatively high specific capacity of the positive electrode on the basis of improving the cycle performance of the electrochemical device. The molar ratio d1 between F and Mn in the first region and the molar ratio d2 between F and Mn in the second region are not particularly limited in this application, as long as the molar ratios satisfy the range of the d1/d2 ratio. For example, the molar ratio d1 between F and Mn in the first region is 1 % to 2.5%, and the molar ratio d2 between F and Mn in the second region is 0.05% to 0.5%.

In some embodiments of this application, the positive active material further includes an element Nb. A molar ratio between Nb and Mn in the first region is c1, a molar ratio between Nb and Mn in the second region is c2, and the two molar ratios satisfy $3 \leq c1/c2 \leq 50$. For example, the c1/c2 ratio may be 3, 10, 15, 20, 25, 30, 35, 40, 45, or any value falling within a range formed by any two thereof.

Introducing the element Nb into the positive active material and controlling the c1/c2 ratio within the foregoing range help to improve the cycle performance of the electrochemical device. The molar ratio c1 between Nb and Mn in the first region and the molar ratio c2 between Nb and Mn in the second region are not particularly limited in this application, as long as the molar ratios satisfy the range of the c1/c2 ratio. For example, the molar ratio c1 between Nb and Mn in the first region is 1 % to 5%, and the molar ratio c2 between Nb and Mn in the second region is 0.1% to 0.8%.

In some embodiments of this application, $D_{v99}$ of the positive active material is 15 $\mu$m to 50 $\mu$m, and preferably 25 $\mu$m to 35 $\mu$m, and a particle size of the positive active material satisfies at least one of conditions (i) to (ii): (i) 5 $\mu$m $\leq D_{v90} \leq$ 30 $\mu$m, and 5 $\mu$m $\leq D_{v99} - D_{v90} < 21$ $\mu$m, preferably 8 $\mu$m $\leq D_{v99} - D_{v90} < 12$ $\mu$m; and (ii) 2 $\mu$m $\leq D_{v10} < 10$

$\mu m$, $1 \leq (D_{v99} - D_{v10})/D_{v50} \leq 4$, and preferably $4\ \mu m \leq D_{v10} <\_ 7\ \mu m$, and $2 \leq (D_{v99} - D_{v10})/D_{v50} \leq 3$.

For example, $D_{v99}$ of the positive active material may be 15 $\mu m$, 20 $\mu m$, 25 $\mu m$, 30 $\mu m$, 35$\mu m$ $\mu m$, 40 $\mu m$, 45 $\mu m$, 50 $\mu m$, or any value falling within a range formed by any two thereof. For example, $D_{v90}$ of the positive active material may be 5 $\mu m$, 8 $\mu m$, 10 $\mu m$, 13 $\mu m$, 15 $\mu m$, 18 $\mu m$, 20 $\mu m$, 23 $\mu m$, 25 $\mu m$, 28 $\mu m$, 30 $\mu m$, or any value falling within a range formed by any two thereof, and the value of $D_{v99}-D_{v90}$ may be 5 $\mu m$, 8 $\mu m$, 10 $\mu m$, 12 $\mu m$, 15 $\mu m$, 18 $\mu m$, 20 $\mu m$, 21 $\mu m$, or any value falling within a range formed by any two thereof. For example, $D_{v10}$ of the positive active material may be 2 $\mu m$, 3 $\mu m$, 4 $\mu m$, 5 $\mu m$, 6 $\mu m$, 7 $\mu m$, 8 $\mu m$, 9 $\mu m$, 10 $\mu m$, or any value falling within a range formed by any two thereof, and the value of $(D_{v99}-D_{v10})/D_{v50}$ may be 1, 1.5, 2, 2.5, 3, 3.5, 4, or any value falling within a range formed by any two thereof.

The comprehensive performance of the electrochemical device can be improved by controlling the values of $D_{v99}$, $D_{v90}$, and $D_{v99}-D_{v90}$ of the positive active material within the foregoing ranges, or controlling the values of $D_{v99}$, $D_{v10}$, and $(D_{v99}-D_{v10})/D_{v50}$ within the foregoing ranges, or controlling the values of $D_{v99}$, $D_{v90}$, $D_{v99}-D_{v90}$, $D_{v10}$, and $(D_{v99}-D_{v10})/D_{v50}$ of the positive active material within the foregoing ranges.

The method for preparing the positive active material is not particularly limited in this application, as long as the objectives of this application can be achieved. For example, the method for preparing the positive active material may include, but without being limited to, the following steps: mixing ingredients, calcining the mixture for a first time at a temperature of T1 for a duration of t1 to obtain an intermediate product; and then adding an intermediate ingredient and mixing the intermediate ingredient with the intermediate product, and calcining for a second time at a temperature of T2 for a duration of t2 to obtain a positive active material.

The temperature T1 and duration t1 in the first-time calcination as well as the temperature T2 and duration t2 in the second-time calcination are not particularly limited in this application, as long as the objectives of this application can be achieved. For example, T1 is 800 °C to 900 °C, t1 is 35 hours to 45 hours, T2 is 450 °C to 600 °C, and t2 is 5 hours to 15 hours.

The ingredient and intermediate ingredient are not particularly limited in this application, as long as the objectives of this application can be achieved. For example, the ingredient and intermediate ingredient each may independently include at least one of $MnO_2$, $Li_2CO_3$, or $Al_2O_3$.

The calcination temperature and duration usually affect the distribution of the elements of the positive active material in the positive active material particles. For example, a lower calcination temperature and/or a shorter calcination duration causes the elements to be distributed in a region close to the surface of the positive active material particle, such as the first region in this application; and a higher calcination temperature and/or a longer calcination duration causes the elements to be distributed in a region far away from the surface of the positive active material particles, for example, the second region in this application.

The method for introducing the element M1 in the positive active material is not particularly limited in this application, as long as the objectives of this application can be achieved. For example, the method is to add an M1-containing compound during the preparation of the positive active material. The M1-containing compound is not particularly limited in this application, as long as the objectives of this application can be achieved. For example, the compound may include, but without being limited to, at least one of MgO, nickel acetate, $TiO_2$, $ZrO_2$, $Nb_2O_5$, MoOs, $V_2O_5$, $WO_3$ or $Y_2O_3$.

The method for introducing the element M2 in the positive active material is not particularly limited in this application, as long as the objectives of this application can be achieved. For example, the method is to add an M2-containing compound during the preparation of the positive active material. The M2-containing compound is not particularly limited in this application, as long as the objectives of this application can be achieved. For example, the compound may include, but without being limited to, at least one of MnS or LiF.

A second aspect of this application provides an electrochemical device, including a positive electrode, a negative electrode, and an electrolytic solution. The positive electrode includes the positive active material according to any embodiment of this application. The positive electrode includes a positive material layer and a positive current collector. The positive material layer includes a first positive material layer and a second positive material layer. The first positive material layer is located between the second positive material layer and the positive current collector. A content of an element Mn in the first positive material layer is higher than the content of the element Mn in the second positive material layer. The content of the element Mn in the first positive material layer is greater than the content of the element Mn in the second positive material layer, thereby helping to reduce the dissolution of manganese on the positive electrode, and improving the cycle performance and storage performance of the electrochemical device.

In some embodiments of this application, based on a mass of the electrolytic solution, the electrolytic solution satisfies at least one of conditions (iii) to (v):

(iii) the electrolytic solution includes a chain carbonate, a mass percentage of the chain carbonate is 20% to 60%, and the chain carbonate includes at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC);

(iv) the electrolytic solution includes a benzene-containing compound, a mass percentage of the benzene-containing compound is 0.01% to 5%, preferably 0.01% to 3%, and further preferably 1% to 3%, and the benzene-containing compound includes at least one of biphenyl (BP), fluorobenzene (FP), or cyclohexylbenzene (CHB); and

(v) the electrolytic solution includes polystyrene (PS), and a mass percentage of the polystyrene is 0.01% to 5%, and preferably 0.01% to 3%.

For example, the mass percentage of the chain carbonate may be 20%, 25%, 30%, 35%, 40%, 45%, 50%, 55%, 60%, or any value falling within a range formed by any two thereof. For example, the mass percentage of the benzene-containing compound may be 0.01%, 0.05%, 0.1%, 1%, 2%, 3%, 4%, 5%, or any value falling within a range formed by any two thereof. For example, the mass percentage of the polystyrene may be 0.01%, 0.05%, 0.1%, 1%, 2%, 3%, 4%, 5%, or any value falling within a range formed by any two thereof. Optionally adding at least one of chain carbonate, benzene-containing compound, or polystyrene into the electrolytic solution, and setting the mass percentage thereof to fall within the foregoing range help to form a synergistic effect between the positive active material and the electrolytic solution, thereby improving the cycle performance and storage performance of the electrochemical device.

In some embodiments of this application, the negative electrode includes a negative material layer. The negative material layer includes a negative active material. The negative active material includes at least one of natural graphite, artificial graphite, or hard carbon. The electrochemical device satisfies at least one of conditions (vi) to (ix): (vi) a particle size of the negative active material satisfies $2\ \mu m \leq D_{v10} \leq 10\ \mu m$, and preferably $3\ \mu m \leq D_{v10} < 8\ \mu m$; (vii) the particle size of the negative active material satisfies $5\ \mu m \leq D_{v90} \leq 20\ \mu m$, and $5\ \mu m \leq D_{v99} - D_{v90} \leq 25\ \mu m$, and preferably $5\ \mu m \leq D_{v90} \leq 15\ \mu m$, and $5\ \mu m < D_{v99} - D_{v90} \leq 10\ \mu m$; (viii) a value of an orientation index (OI) of the negative active material is 5 to 30, and preferably 8 to 20; and (ix) a graphitization degree of the negative active material is 92% to 96%, and preferably 93% to 95%.

For example, $D_{v10}$ of the negative active material may be $2\ \mu m$, $3\ \mu m$, $4\ \mu m$, $5\ \mu m$, $6\ \mu m$, $7\ \mu m$, $8\ \mu m$, $9\ \mu m$, $10\ \mu m$, or any value falling within a range formed by any two thereof. For example, $D_{v90}$ of the negative active material may be $5\ \mu m$, $8\ \mu m$, $10\ \mu m$, $13\ \mu m$, $15\ \mu m$, $18\ \mu m$, $20\ \mu m$, or any value falling within a range formed by any two thereof, and the value of $D_{v99}-D_{v90}$ may be $5\ \mu m$, $8\ \mu m$, $10\ \mu m$, $13\ \mu m$, $15\ \mu m$, $18\ \mu m$, $20\ \mu m$, $23\ \mu m$, $25\ \mu m$, or any value falling within a range formed by any two thereof. For example, the OI value of the negative active material may be 5, 8, 10, 13, 15, 18, 20, 23, 25, 28, 30, or any value falling within a range formed by any two thereof. For example, the graphitization degree of the negative active material may be 92%, 93%, 94%, 95%, 96%, or any value falling within a range formed by any two thereof.

Adjusting $D_{v10}$ of the negative active material, or the values of $D_{v10}$, $D_{v90}$, and $D_{v99} - D_{v90}$ of the negative active material, or the OI value of the negative active material, or the graphitization degree of the negative active material, or at least one thereof to fall within the range specified herein helps to form a synergistic effect between the negative active material, the positive active material, and the electrolytic solution, and helps to improve the cycle performance and storage performance of the electrochemical device.

In some embodiments of this application, the electrochemical device includes a separator. An initial exothermic temperature of the separator measured by differential scanning calorimetry (DSC) is 138 °C to 145 °C, and preferably 141 °C to 143 °C, and further preferably, 141 °C to 142 °C. For example, the initial exothermic temperature of the separator measured by differential scanning calorimetry is 138 °C, 139 °C, 140 °C, 141 °C, 142 °C, 143 °C, 144 °C, 145 °C, or any value falling within a range formed by any two thereof. Adjusting the initial exothermic temperature of the separator measured by DSC to fall within the range specified herein helps to form a synergistic effect between the separator and the negative active material, and between the positive active material and the electrolytic solution, and helps to improve the cycle performance and storage performance of the electrochemical device.

In this application, the molar ratio between different elements in the positive active material is calculated by the following method: disassembling an electrochemical device containing the positive active material at 0% SOC to obtain a positive electrode, and then testing the positive electrode to obtain the content of each element.

The positive current collector is not particularly limited in this application, as long as the objectives of this application can be achieved. For example, the positive current collector may include, but without being limited to, an aluminum foil, an aluminum alloy foil, a composite current collector, or the like. In this application, the thickness of the positive current collector is not particularly limited, as long as the objectives of this application can be achieved. For example, the thickness is $8\ \mu m$ to $12\ \mu m$.

In this application, the positive material layer includes the positive active material according to any embodiment of this application described above. The positive material layer may further include a binder. The binder is not particularly limited in this application, as long as the objectives of this application can be achieved. For example, the binder may include, but without being limited to, at least one of polyacrylic acid, polyacrylic acid sodium, polyacrylic acid potassium, polyacrylic acid lithium, polyimide, polyvinyl alcohol, carboxymethyl cellulose, sodium carboxymethyl cellulose, polyimide, polyamide imide, styrene butadiene rubber, or polyvinylidene fluoride.

In this application, the positive material layer may further include a conductive agent. The conductive agent is not particularly limited in this application, as long as the objectives of this application can be achieved. For example, the conductive agent may include, but without being limited to, at least one of conductive carbon black (Super P), carbon nanotubes (CNTs), carbon fibers, flake graphite, Ketjen black, graphene, a metal material, or a conductive polymer. The carbon nanotubes may include, but without being limited to, single-walled carbon nanotubes and/or multi-walled carbon nanotubes. The carbon fibers may include, but without being limited to, vapor grown carbon fibers (VGCF) and/or carbon nanofibers. The metal material may include, but without being limited to, metal powder and/or metal fibers. Specifically, the metal may include, but without being limited to at least one of copper, nickel, aluminum, or silver. The conductive polymer may include, but without being limited to, at least one of polyphenylene derivatives, polyaniline, polythiophene, polyacetylene, or polypyrrole.

Optionally, the positive electrode may further include a conductive layer. The conductive layer is located between the positive current collector and the positive material layer. The components of the conductive layer are not particularly limited in this application, and may be a conductive layer commonly used in the art. For example, the conductive layer may include, but without being limited to, the foregoing conductive agent and binder.

In this application, the negative electrode may include a negative current collector. The negative current collector is not particularly limited in this application, as long as the objectives of this application can be achieved. The negative current collector may include, but without being limited to, a copper foil, a copper alloy foil, a nickel foil, a stainless steel foil, a titanium foil, foamed nickel, foamed copper, or a composite current collector, or the like. In this application, the thickness of the negative current collector is not particularly limited, as long as the objectives of this application can be achieved. For example, the thickness is 4 $\mu$m to 12 $\mu$m. In this application, the negative material layer may be disposed on one surface of the negative current collector in a thickness direction or on both surfaces of the negative current collector in the thickness direction. It is hereby noted that the "surface" here may be the entire region of the negative current collector, or a partial region of the negative current collector, without being particularly limited in this application, as long as the objectives of the application can be achieved.

In this application, the negative material layer may further include a conductive agent. The conductive agent is not particularly limited in this application, as long as the objectives of this application can be achieved. For example, the conductive agent may include, but without being limited to, at least one of the foregoing conductive agents.

In this application, the negative material layer may further include a binder. The binder is not particularly limited in this application, as long as the objectives of this application can be achieved. For example, the binder may include, but without being limited to, at least one of the foregoing binders.

Optionally, the negative electrode may further include a conductive layer. The conductive layer is located between the negative current collector and the negative material layer. The components of the conductive layer are not particularly limited in this application, and may be a conductive layer commonly used in the art. The conductive layer may include, but without being limited to, the foregoing conductive agent and binder.

The separator is not particularly limited in this application, as long as the objectives of this application can be achieved. For example, the separator may include, but without being limited to, at least one of polyethylene (PE)-based, polypropylene (PP)-based, or polytetrafluoroethylene-based polyolefin (PO) separator, a polyester film (such as polyethylene terephthalate (PET) film), a cellulose film, a polyimide film (PI), a polyamide film (PA), a spandex or aramid film, a woven film, a non-woven film (non-woven fabric), a microporous film, a composite film, separator paper, a laminated film, or a spinning film, and preferably PP. The separator according to this application may be a porous structure. The pore size of the separator is not particularly limited, as long as the objectives of this application can be achieved. For example, the pore size may be 0.01 $\mu$m to 1 $\mu$m. The thickness of the separator is not particularly limited in this application, as long as the objectives of this application can be achieved. For example, the thickness may be 5 $\mu$m to 500 $\mu$m, and preferably 25 $\mu$m.

For example, the separator may include a substrate layer and a surface treatment layer. The substrate layer may be a non-woven fabric, film or composite film, which, in each case, is porous. The material of the substrate layer may include, but without being limited to, at least one of polyethylene, polypropylene, polyethylene terephthalate, polyimide, or the like. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer formed by mixing a polymer and an inorganic compound.

The inorganic compound layer may include, but without being limited to, inorganic particles and a binder. The inorganic particles are not particularly limited in this application, and may include, but without being limited to, at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited in this application, and may include, but without being limited to, at least one of polyvinylidene difluoride, poly(vinylidene difluoride-co-hexafluoropropylene), polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer may include, but without being limited to, at least one of polyamide, polyacrylonitrile, acrylate polymer, polyacrylic acid, polyacrylate, polyvinylpyrrolidone, polyvinyl ether, polyvinylidene difluoride, poly(vinylidene difluoride-hexafluoropropylene), or the like.

In this application, the electrolytic solution may further include a lithium salt. The lithium salt is not particularly limited in this application, as long as the objectives of this application can be achieved. For example, the lithium salt may include, but without being limited to, at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. Preferably, the lithium salt includes $LiPF_6$.

In this application, the electrolytic solution may further include a nonaqueous solvent. The nonaqueous solvent is not particularly limited in this application, as long as the objectives of this application can be achieved. For example, the nonaqueous solvent may include, but without being limited to, at least one of a carbonate compound, a carboxylate compound, an ether compound, or other organic solvents. The carbonate compound may include, but without being limited to, at least one of a cyclic carbonate compound and/or a fluorocarbonate compound. The cyclic carbonate compound may include, but without being limited to, at least one of ethylene carbonate (EC for short), propylene carbonate (PC), butylene carbonate (BC), or vinyl ethylene carbonate (VEC). The fluorocarbonate compound may include, but without being limited to, at least one of fluoroethylene carbonate (FEC for short), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but without being limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, or caprolactone. The ether compound may include, but without being limited to, at least one of dibutyl ether, tetraglyme, diglyme, 1,2-dimethoxyethane, 1,2-diethoxyethane, ethoxymethoxyethane, 2-methyltetrahydrofuran, or tetrahydrofuran. The other organic solvent may include, but without being limited to, at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphate ester. Based on the mass of the electrolytic solution, the mass percentage of the nonaqueous solvent is 15% to 80%, for example, 15%, 20%, 30%, 40%, 50%, 60%, 70%, 80%, or any value falling within a range formed by any two thereof.

The electrochemical device in this application is not particularly limited, and may be any device in which an electrochemical reaction occurs. In some implementation solutions, the electrochemical device may include, but is not limited to, a lithium metal secondary battery, a lithium-ion secondary battery (lithium-ion battery), a lithium polymer secondary battery, a lithium-ion polymer secondary battery, or the like.

The process of preparing the electrochemical device is well known to a person skilled in the art, and is not particularly limited in this application. For example, the preparation process may include, but without being limited to, the following steps: stacking the positive electrode, the separator, and the negative electrode in sequence, and performing operations such as winding and folding as required to obtain a jelly-roll electrode assembly; putting the electrode assembly into a package, injecting the electrolytic solution into the package, and sealing the package to obtain an electrochemical device; or, stacking the positive electrode, the separator, and the negative electrode in sequence, and then fixing the four corners of the entire stacked structure by use of adhesive tape to obtain a stacked-type electrode assembly, putting the electrode assembly into a package, injecting the electrolytic solution into the package, and sealing the package to obtain an electrochemical device. In addition, an overcurrent prevention element, a guide plate, and the like may be placed into the package as required, so as to prevent the rise of internal pressure, overcharge, and overdischarge of the electrochemical device.

A third aspect of this application provides an electronic device. The electronic device includes the electrochemical device according to any embodiment of this application described above. The electrochemical device according to this application achieves excellent cycle performance and storage performance, and the positive electrode achieves a relatively high specific capacity. Therefore, the electronic device according to this application is excellent in longevity and performance.

The electronic device according to this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

This application provides a positive active material, including an element Mn and an element Al. A positive active material particle includes a first region close to a surface of the positive active material particle and a second region away from the surface of the positive active material particle. A molar ratio between Al and Mn in the first region is a1, the molar ratio between Al and Mn in the second region is a2, and the two molar ratios satisfy $1.1 \leq a1/a2 \leq 100$. By controlling the molar ratio a1 between Al and Mn in the first region, and by controlling the ratio of the molar ratio a1 between Al and Mn in the first region to the molar ratio a2 between Al and Mn in the second region so that the a1/a2 ratio falls within the foregoing range, the Al in the positive active material is concentrated richly in the region close to the surface of the positive active material, thereby not only effectively alleviating dissolution of manganese on the positive electrode to improve cycle performance and storage performance of the electrochemical device, but also reducing a total content of Al in the positive active material to maintain a relatively high specific capacity of the positive electrode, and in turn, improving comprehensive performance of the electrochemical device.

## BRIEF DESCRIPTION OF DRAWINGS

To describe the technical solutions in the embodiments of this application more clearly, the following outlines the drawings to be used in the embodiments of this application. Evidently, the drawings outlined below merely illustrate some embodiments of this application, and a person of ordinary skill in the art may derive other embodiments from the drawings.

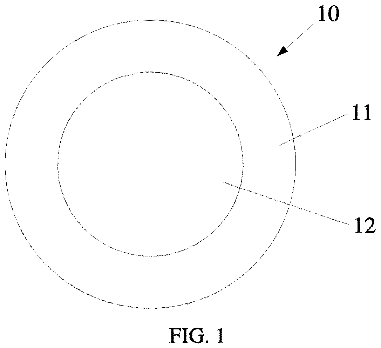

FIG. 1 is a schematic sectional view of a positive active material particle according to some embodiments of this application.

Reference numerals: 10. positive active material; 11. first region; 12. second region.

## DETAILED DESCRIPTION OF EMBODIMENTS

To make the objectives, technical solutions, and advantages of this application clearer, the following describes this application in more detail with reference to drawings and embodiments. Evidently, the described embodiments are merely a part of but not all of the embodiments of this application. All other embodiments derived by a person of ordinary skill in the art based on the embodiments of this application without making any creative efforts fall within the protection scope of this application.

FIG. 1 is a schematic sectional view of a positive active material particle according to some embodiments of this application. As can be seen, a first region 11 is a region close to the surface of a particle of a positive active material 10, and the second region 12 is a region far away from the surface of the particle of the positive active material 10.

It is hereby noted that in specific embodiments of this application, this application is construed by using a lithium-ion battery as an example of the electrochemical device, but the electrochemical device according to this application is not limited to the lithium-ion battery.

### Embodiments

The implementations of this application are described below in more detail with reference to embodiments and comparative embodiments. Various tests and evaluations are performed in accordance with the following methods. In addition, unless otherwise specified, "%" is a percentage by mass.

Test methods and devices:

Testing the content of an element:

    a) Preparing a sulfuric acid solution, of which the concentration is 2.4 mol/L.

    b) Taking 50 grams of positive active material (fully discharging a lithium-ion battery until the voltage reaches 2.5 V, scraping off a positive material layer from a positive electrode by use of a ceramic knife, and calcining the positive active material layer at 400 °C for 5 hours to obtain the positive active material).

    c) Mixing 300 mL of sulfuric acid solution and 50 grams of positive active material, putting the mixture in a magnetic stirrer, and stirring at a constant speed of 200 r/min.

    d) Stopping stirring at the end of 6 hours of stirring, leaving the mixture to stand for 4 hours, and then leaching the mixture by use of filter paper, with a filtrate retained. Performing a test by use of an inductively coupled plasma-optical emission spectrometer (Model: Thermo ICAP6300) to calculate a molar ratio between different elements in the first region, for example, a molar ratio between Al and Mn, a molar ratio between Li and Mn, a molar ratio between Nb and Mn, and a molar ratio between F and Mn.

    e) Drying the leached specimen at 85 °C for 8 hours.

    f) Testing the dried specimen by using the inductively coupled plasma-optical emission spectrometer (Model: Thermo ICAP6300), so as to calculate a molar ratio between different elements in the second region, for example, a molar ratio between Al and Mn, a molar ratio between Li and Mn, a molar ratio between Nb and Mn, and a molar ratio between F and Mn.

Testing the $Mn^{3+}/Mn^{4+}$ molar ratio:

Testing and analyzing the molar ratio between $Mn^{3+}$ and $Mn^{4+}$ in the first region and second region of the surface of the positive active material particle by X-ray photoelectron spectroscopy (XPS).

Testing the cycle performance:

Charging, at a temperature of 25 °C, the lithium-ion battery at a constant current of 0.5 C until the voltage reaches 4.2 V, and then charging the battery at a constant voltage of 4.2 V until the current reaches 0.05 C. Subsequently, discharging the battery at a constant current of 1 C until the voltage reaches 2.8 V, and recording the discharge capacity as $D_{01}$, thereby completing one cycle. Performing the foregoing steps to complete 500 cycles, each being a "0.5 C charge and 1 C discharge" cycle. Measuring the discharge capacity at the end of the 500th cycle, denoted as $D_1$. Capacity retention rate (%) at the end of 500 cycles performed at 25 °C = $D_1/D_{01} \times 100\%$.

Testing the storage performance:

Leaving the lithium-ion battery to stand in a 25 °C environment for 30 minutes, and then charging the battery at a constant current rate of 0.2 C until the voltage reaches 4.2 V, and charging the battery at a constant voltage of 4.2 V until the current reaches 0.05 C. Leaving the battery to stand for 30 minutes, and then discharging the battery at a rate of 0.5 C until the voltage reaches 2.8 V. Recording the discharge capacity at this time as a before-storage capacity of the lithium-ion battery. Subsequently, storing the fully charged battery in an approximately 60 °C oven for approximately 7 days, and measuring the after-storage capacity. A detailed test process is: Leaving the lithium-ion battery to stand in a 25 °C environment for 30 minutes, and then charging the battery at a constant current rate of 0.2 C until the voltage reaches 4.2 V, and charging the battery at a constant voltage of 4.2 V until the current reaches 0.05 C. Leaving the battery to stand for 30 minutes, and then discharging the battery at a rate of 0.5 C until the voltage reaches 2.8 V Recording the discharge capacity at this time as an after-storage capacity of the lithium-ion battery.

High-temperature storage capacity retention rate of the lithium-ion battery stored at 60°C = (after-storage capacity/before-storage capacity) $\times$ 100%.

Testing 4 lithium-ion batteries for each embodiment or comparative embodiment, and averaging out the values to obtain a final result.

Testing the specific capacity:

Making the positive electrode in the embodiment or comparative embodiment together with lithium metal into a button battery. Performing constant-current and constant-voltage charging on the button battery at a charge current of 0.5 C (such a current at which the battery is discharged that the nominal capacity is fully discharged within 2 hours) in a 25 °C environment until the voltage reaches an upper limit 4.2 V Subsequently, performing constant-current discharging at a discharge current of 0.2 C until the voltage finally reaches 2.8 V Recording the first-cycle discharge capacity. A ratio of the first-cycle discharge capacity to the mass of the positive electrode is recorded as a specific capacity of the positive electrode. Testing 4 positive electrodes for each embodiment or comparative embodiment, and averaging out the values to obtain a final result. The mass of the positive electrode is a mass net of the positive current collector. The method for preparing the button battery is a preparation method known in the art. The electrolytic solution in the button battery is the electrolytic solution used in each embodiment or comparative embodiment.

Testing the initial exothermic temperature of the separator:

Performing the test by using DSC. Increasing the temperature at a speed of 10 °C/min to obtain a DSC curve of the separator. Obtaining the initial exothermic temperature of the separator from the DSC curve.

Testing the particle size:

Measuring the particle size of the positive active material or negative active material by using a laser particle size analyzer (model: Mastersizer 3000). $D_{v10}$, $D_{v50}$, $D_{v90}$, and $D_{v99}$ represent a particle size of the material measured when the cumulative volume of the measured particles reaches 10%, 50%, 90%, and 99%, respectively, of the total volume of all specimen particles in a volume-based particle size distribution, as measured by using a laser scattering particle size analyzer.

**Embodiment 1-1**

<Preparing a positive active material>

First-time calcination: Mixing the ingredients $MnO_2$, $Al_2O_3$, and $Li_2CO_3$ at the following molar ratios: the molar ratio between Al and Mn is x1, and the molar ratio between Li and Mn is y1. Calcining mixture at a temperature of T1 for a duration of t1 to obtain an intermediate product.
Second-time calcination: Mixing $Al_2O_3$ and $Li_2CO_3$ with the intermediate product, calcining the mixture at a temperature of T2 for a duration of t2 to obtain a positive active material, that is, Al-containing lithium manganese oxide (LMO).
The molar ratio between Al in the $Al_2O_3$ added during the second-time calcination and Mn in the intermediate product is x2. The molar ratio between Li in the $Li_2CO_3$ added during the second-time calcination to Mn in the intermediate product is y2. The ingredient $MnO_2$ contains Al, and the molar ratio between Al and Mn is x0. $D_{v99}$ of the positive active material is 45 $\mu$m, $D_{v90}$ is 26 $\mu$m, $D_{v50}$ is 11.2 $\mu$m, and $D_{v10}$ is 6 $\mu$m.

<Preparing a positive electrode>

Mixing the positive active material prepared above, a conductive agent acetylene black, a binder polyvinylidene difluoride (PVDF) at a mass ratio of 96.5: 2: 1.5, adding N-methyl-pyrrolidone (NMP), and stirring the mixture well with a vacuum mixer to obtain a positive slurry, in which a solid content is 70 wt%. Coating one surface of a 12-$\mu$m-thick positive current collector aluminum foil with the positive slurry evenly, and drying the aluminum foil at 120 °C for 1 hour to obtain a positive electrode coated with a positive material layer on a single side. Repeating the foregoing steps on the other surface of the aluminum foil to obtain a positive electrode coated with the positive material layer on both sides. Subsequently, performing cold calendering, cutting, and slitting, and drying under vacuum conditions at 120 °C for 1 hour to obtain a positive electrode of 74 mm × 867 mm in size.

<Preparing a negative electrode>

Mixing artificial graphite as a negative active material, acetylene black as a conductive agent, styrene butadiene rubber (SBR) as a binder, and sodium carboxymethyl cellulose (CMC) as a thickener at a mass ratio of 95: 2: 2: 1, adding deionized water, and stirring the mixture well with a vacuum mixer to obtain a negative slurry, in which a solid content is 75 wt%. Coating one surface of a 12-$\mu$m-thick negative current collector copper foil with the negative slurry evenly, and drying the copper foil at 120 °C to obtain a negative electrode coated with a 130-gm-thick negative material layer on a single side. Repeating the foregoing steps on the other surface of the aluminum foil to obtain a negative electrode coated with the negative active material layer on both sides. Subsequently, performing cold calendering, cutting, and slitting, and drying under vacuum conditions at 120 °C for 1 hour to obtain a negative electrode of 78 mm × 875 mm in size. $D_{v99}$ of the negative active material is 30 $\mu$m, $D_{v90}$ is 18 $\mu$m, $D_{v10}$ is 5 $\mu$m, the OI value is 18, and the graphitization degree is 96%.

<Preparing an electrolytic solution>

Mixing EC, PC, DEC, and EMC at a mass ratio of 5: 1: 4: 7 in an dry argon atmosphere glovebox to obtain an organic solvent, adding a lithium salt $LiPF_6$ into the organic solvent to dissolve, and stirring the mixture well to obtain an electrolytic solution. In the electrolytic solution, the mass percentage of the $LiPF_6$ is 12.5%, and the remainder is the organic solvent.

<Preparing a separator>

Using a 7-$\mu$m-thick porous polyethylene film (manufactured by Celgard Co., Ltd.) as a separator. The initial exothermic temperature of the separator is 141 °C.

<Preparing a lithium-ion battery>

Stacking the prepared positive electrode, the separator, and the negative electrode sequentially in such a way that the separator is located between the positive electrode and the negative electrode to serve a function of separation, and winding the stacked structure to obtain an electrode assembly. Putting the electrode assembly into an aluminum plastic film package, drying the packaged electrode assembly, and then injecting the electrolytic solution. Performing vacuum sealing, static standing, chemical formation, degassing, and edge trimming to obtain a lithium-ion battery.

**Embodiment 1-2 to Embodiment 1-8**

Identical to Embodiment 1-1 except that the relevant preparation parameters are adjusted according to Table 1.

**Embodiment 2-1 to Embodiment 2-4**

Identical to Embodiment 1-4 except that the relevant preparation parameters are adjusted according to Table 2.

**Embodiments 3-1 to 3-5 and Embodiments 3-7 and 3-8**

Identical to Embodiment 1-4 except that, in <Preparing a positive active material>, the compound added corresponding to the element M1 and the content of the component are adjusted during the first-time calcination to obtain the positive active material in which the molar ratio between elements is shown in Table 3.

**Embodiment 3-6**

Identical to Embodiment 1-4 except that, in <Preparing a positive active material>, the compound corresponding to the element M1 is added during the first-time calcination so that the molar ratio between M1 and Mn is 1.0%; the compound corresponding to the element M1 is added during the second-time calcination so that the molar ratio of M1 to Mn in the intermediate product is 2.6%, thereby obtaining the positive active material in which the molar ratio between elements is shown in Table 3.

**Embodiment 3-9**

Identical to Embodiment 1-4 except that, in <Preparing a positive active material>, the compound added corresponding to the element M1 and the content of the compound are adjusted during the first-time calcination so that the molar ratio between M1 and Mn is 1.0%; the compound corresponding to the element M1 is added during the second-time calcination so that the molar ratio of M1 to Mn in the intermediate product is 1.0%, thereby obtaining the positive active material in which the molar ratio between elements is shown in Table 3.

**Embodiment 3-10 to Embodiment 3-13**

Identical to Embodiment 1-4 except that the compound corresponding to the element M2 is added during the first-time calcination so that the mass percentage of the element M2 is consistent with Table 3.

**Embodiment 3-14**

Identical to Embodiment 3-7 except that the compound corresponding to the element M2 is added during the first-time calcination so that the mass percentage of the element M2 is consistent with Table 3.

**Embodiment 4-1 to Embodiment 4-3**

Identical to Embodiment 1-4 except that the relevant preparation parameters are adjusted according to Table 4.

**Embodiment 5-1 to Embodiment 5-6**

Identical to Embodiment 1-4 except that, in preparing the electrolytic solution, the benzene-containing compound and the PS are added according to Table 5, and the relevant preparation parameters are adjusted.

**Comparative Embodiment 1-1 and Comparative Embodiment 1-2**

Identical to Embodiment 1-4 except that the relevant preparation parameters are adjusted according to Table 1.

Table 1 to Table 5 show the relevant preparation parameters and test results of the embodiments and comparative embodiments.

**Table 1**

| | x0 (%) | x1 (%) | T1 (°C) | t1 (h) | x2 (%) | T2 (°C) | t2 (h) | a1/a2 | a1 (%) | a2 (%) | Molar ratio (%) between Al and Mn in positive active material | e | 500th-cycle capacity retention rate (%) | Storage capacity retention rate (%) | Specific capacity of positive electrode (mAh/g) |
|---|---|---|---|---|---|---|---|---|---|---|---|---|---|---|---|
| Embodiment 1-1 | 3.0 | 1.0 | 800 | 35 | 0.5 | 600 | 12 | 1.6 | 6.1 | 3.81 | 4.5 | 0.95 | 76 | 80 | 105 |
| Embodiment 1-2 | 2.0 | 0.0 | 800 | 35 | 2.0 | 600 | 12 | 4.9 | 9.8 | 2 | 4.0 | 0.93 | 79 | 84 | 107 |
| Embodiment 1-3 | 0.0 | 1.0 | 810 | 36 | 2.0 | 580 | 11 | 10.4 | 9.4 | 0.9 | 3.0 | 0.91 | 85 | 87 | 110 |
| Embodiment 1-4 | 0.0 | 0.5 | 830 | 38 | 3.0 | 580 | 11 | 28.4 | 12.8 | 0.45 | 3.5 | 0.88 | 92 | 90 | 108 |
| Embodiment 1-5 | 0.0 | 0.3 | 800 | 35 | 3.4 | 570 | 10 | 51.1 | 13.8 | 0.27 | 3.7 | 0.85 | 94 | 92 | 109 |
| Embodiment 1-6 | 0.0 | 0.2 | 800 | 35 | 4.0 | 570 | 10 | 89.4 | 16.1 | 0.18 | 4.2 | 0.83 | 95 | 93 | 106 |
| Embodiment 1-7 | 3 | 1.0 | 820 | 37 | 6.0 | 600 | 12 | 7.3 | 28.3 | 3.88 | 10.0 | 0.92 | 87 | 89 | 97 |
| Embodiment 1-8 | 3 | 3.0 | 800 | 35 | 7.0 | 610 | 13 | 6.1 | 35.0 | 5.74 | 13.0 | 0.91 | 83 | 87 | 90 |
| Comparative Embodiment 1-1 | 0 | 0.8 | 820 | 37 | 0.05 | 650 | 15 | 1 | 0.85 | 0.85 | 0.81 | 1.03 | 68 | 65 | 112 |
| | x0 (%) | x1 (%) | T1 (°C) | t1 (h) | a2 (%) | T2 (°C) | t2 (h) | a1/a2 | a1 (%) | a2 (%) | Molar ratio (%) between Al and Mn in positive active material | e | 500th-cycle capacity retention rate (%) | Storage capacity retention rate (%) | Specific capacity of positive electrode (mAh/g) |
| Comparative Embodiment 1-2 | 0 | 0.2 | 760 | 30 | 7.0 | 500 | 10 | 140 | 28.0 | 0.2 | 7.2 | 0.75 | 85 | 87 | 88 |

As can be seen from Embodiment 1-1 to Embodiment 1-8 and Comparative Embodiment 1-1 to Comparative Embodiment 1-2, when the ratio of the molar ratio a1 between Al and Mn in the first region of the positive active material to the molar ratio a2 between Al and Mn in the second region, that is, a1/a2, falls within the range specified herein, this application can improve both the specific capacity of the positive electrode in the electrochemical device and the cycle performance and storage performance of the electrochemical device. In addition, when the value of e falls within the range specified herein, the obtained electrochemical device is excellent in both cycle performance and storage performance, and the positive electrode in the electrochemical device achieves a relatively high specific capacity. As can be seen from Embodiment 1-1 to Embodiment 1-8 and Comparative Embodiment 1-1, when the molar ratio a1 between Al and Mn in the first region falls within the range specified herein, the obtained electrochemical device is excellent in both cycle performance and storage performance, and the positive electrode in the electrochemical device achieves a relatively high specific capacity. As can be seen from Embodiment 1-1 to Embodiment 1-8, when the molar ratio a2 between Al and Mn in the second region as well as the molar ratio between Al and Mn in the positive active material fall within the ranges specified herein, the obtained electrochemical device is excellent in both cycle performance and storage performance, and the positive electrode in the electrochemical device achieves a relatively high specific capacity.

Table 2

| Embodiment | yl(%) | T1 (°C) | t1 (h) | y2 (%) | T2 (°C) | t2 (h) | b1/b2 | 500th-cycle capacity retention rate (%) | Storage capacity retention rate (%) | Specific capacity of positive electrode (mAh/g) |
|---|---|---|---|---|---|---|---|---|---|---|
| Embodiment 1-4 | 55.0 | 830 | 38 | 0.0 | 580 | 11 | 1 | 92.0 | 90.0 | 108 |
| Embodiment 2-1 | 55.5 | 835 | 39 | 3.0 | 580 | 11 | 1.16 | 93.0 | 92.0 | 108 |
| Embodiment 2-2 | 56.0 | 840 | 40 | 5.0 | 580 | 11 | 1.25 | 94.0 | 94.0 | 108 |
| Embodiment 2-3 | 56.5 | 845 | 41 | 10.0 | 580 | 11 | 1.56 | 94.5 | 94.5 | 108 |
| Embodiment 2-4 | 54.0 | 830 | 38 | 10.0 | 450 | 9 | 1.82 | 95.0 | 95.0 | 108 |

As can be seen from Embodiment 1-4 and Embodiment 2-1 to Embodiment 2-4, when the ratio of the molar ratio b1 between Li and Mn in the first region of the surface of the positive active material particle to the molar ratio b2 between Li and Mn in the second region, that is, b1/b2, falls within the range specified herein, the obtained electrochemical device is excellent in both cycle performance and storage performance, and the positive electrode in the electrochemical device achieves a relatively high specific capacity. With the increase of the b1/b2 ratio, the cycle performance and storage performance of the electrochemical device show a gradual upward trend.

**Table 3**

| Embodiments | Element M1 | M1/Mn (%) | A1/M1 | c1 (%) | c2 (%) | c1/c2 | Element M2 | Mass percentage of element M2 (%) | d1 (%) | d2 (%) | d1/d2 | 500th-cycle capacity retention rate (%) | Storage capacity retention rate (%) | Specific capacity of positive electrode (mAh/g) |
|---|---|---|---|---|---|---|---|---|---|---|---|---|---|---|
| Embodiment 1-4 | / | / | / | / | / | / | / | / | / | / | / | 92 | 90 | 108 |
| Embodiment 3-1 | Mg | 0.5 | 7.0 | / | / | / | / | / | / | / | / | 93 | 91 | 107 |
| Embodiment 3-2 | Ni | 0.5 | 7.0 | / | / | / | / | / | / | / | / | 93 | 91 | 108 |
| Embodiment 3-3 | Ti | 0.5 | 7.0 | / | / | / | / | / | / | / | / | 94 | 93 | 109 |
| Embodiment 3-4 | Mg+Ti | 0.5 | 7.0 | / | / | / | / | / | / | / | / | 93 | 92 | 107 |
| Embodiment 3-5 | Mg+Zr | 1.0 | 3.5 | / | / | / | / | / | / | / | / | 94 | 94 | 107 |
| Embodiment 3-6 | Mg+Zr | 3.6 | 1.0 | / | / | / | / | / | / | / | / | 94 | 94 | 106 |
| Embodiment 3-7 | Mg+Zr+Nb | 2.0 | 1.8 | 3.2 | 0.3 | 11 | / | / | / | / | / | 96 | 94 | 111 |
| Embodiment 3-8 | Mg+Zr+Nb | 2.0 | 1.8 | 2.0 | 0.6 | 3 | / | / | / | / | / | 95 | 95 | 108 |
| Embodiment 3-9 | Mg+Zr+Nb | 2.0 | 1.8 | 3.9 | 0.1 | 49 | / | / | / | / | / | 96 | 96 | 112 |
| Embodiment 3-10 | / | / | / | / | / | / | S | 1.2 | / | / | / | 93 | 92 | 109 |
| Embodiment 3-11 | / | / | / | / | / | / | F | 0.5 | 1.7 | 0.1 | 21 | 94 | 93 | 112 |
| Embodiment 3-12 | / | / | / | / | / | / | F | 0.5 | 1.0 | 0.3 | 3 | 92 | 93 | 111 |

(continued)

| Embodiments | Element M1 | M1/Mn (%) | A1/M1 | c1 (%) | c2 (%) | c1/c2 | Element M2 | Mass percentage of element M2 (%) | d1 (%) | d2 (%) | d1/d2 | 500th-cycle capacity retention rate (%) | Storage capacity retention rate (%) | Specific capacity of positive electrode (mAh/g) |
|---|---|---|---|---|---|---|---|---|---|---|---|---|---|---|
| Embodiment 3-13 | / | / | / | / | / | / | S+F | 1.7 | 1.7 | 0.1 | 21 | 94 | 94 | 112 |
| Embodiment 3-14 | Mg+Zr+Nb | 2.0 | 1.8 | 3.2 | 0.3 | 11 | S+F | 1.7 | 1.7 | 0.1 | 21 | 93 | 93 | 113 |

Note: In the embodiments in Table 3, during preparation of the positive active material, the compound corresponding to Mg is MgO, the compound corresponding to Ni is nickel acetate, the compound corresponding to Ti is $TiO_2$, the compound corresponding to Zr is ZiOz, the compound corresponding to Nb is $Nb_2O_5$, the compound corresponding to S is MnS, and the compound corresponding to F is LiF. "/" in Table 3 indicates nonexistence of the corresponding preparation parameter or material.

As can be seen from Embodiment 1-4, Embodiment 3-1 to Embodiment 3-14, the element M1 and/or the element M2 added can further improve the cycle performance and storage performance of the electrochemical device, and increase the specific capacity of the positive electrode in the electrochemical device. As can be seen from Embodiment 3-1 to Embodiment 3-9, when the element M1 falling with the range specified herein is introduced in the positive active material, and the values of the molar ratio between M1 and Mn, the molar ratio between Al and M1, and the c1/c2 ratio fall within the ranges specified herein, the obtained electrochemical device is excellent in both cycle performance and storage performance, and the positive electrode in the electrochemical device achieves a relatively high specific capacity. As can be seen from Embodiment 3-10 to Embodiment 3-13, when the element M2 falling with the range specified herein is introduced in the positive active material, and the values of the mass percentage of the element M2 and the d1/d2 ratio fall within the ranges specified herein, the obtained electrochemical device is excellent in both cycle performance and storage performance, and the positive electrode in the electrochemical device achieves a relatively high specific capacity. As can be seen from Embodiment 1-4 and Embodiment 3-14, the element M1 and the element M2 added concurrently can further improve the cycle performance and storage performance of the electrochemical device, and increase the specific capacity of the positive electrode in the electrochemical device.

Table 4

| Embodiments | $D_{v99}$ of positive active material ($\mu$m) | $D_{v90}$ of positive active material ($\mu$m) | $D_{v99}$-$D_{v90}$ of positive active material ($\mu$m) | $D_{v10}$ of positive active material ($\mu$m) | $(D_{v99}$-$D_{v10})/D_{v30}$ of positive active material | 500th-cycle capacity retention rate (%) | Storage capacity retention rate (%) | Specific capacity of positive electrode (mAh/g) |
|---|---|---|---|---|---|---|---|---|
| Embodiment 1-4 | 45 | 26 | 19 | 6 | 3.3 | 92 | 90 | 108 |
| Embodiment 4-1 | 39 | 27 | 12 | 2 | 3.1 | 94 | 93 | 108 |
| Embodiment 4-2 | 35 | 18 | 17 | 9 | 2.2 | 93 | 93 | 108 |
| Embodiment 4-3 | 27 | 18 | 9 | 3 | 2.0 | 95 | 95 | 109 |

The particle size of positive active material generally affects the performance, such as cycle performance and storage performance, of the electrochemical device. As can be seen from Embodiment 1-4 and Embodiment 4-1 to Embodiment 4-3, when the values of $D_{v90}$, $D_{v10}$, $D_{v99}$-$D_{v90}$, and $(D_{v99}$-$D_{v10})/D_{v50}$ of the positive active material fall with the ranges specified herein, the obtained electrochemical device is excellent in both cycle performance and storage performance, and the positive electrode in the electrochemical device achieves a relatively high specific capacity.

Table 5

| | Benzene-containing compound | Mass percentage of benzene-containing compound (%) | Mass percentage of PS (%) | 500th-cycle capacity retention rate (%) | Storage capacity retention rate (%) |
|---|---|---|---|---|---|
| Embodiment 1-4 | / | / | / | 92 | 90 |
| Embodiment 5-1 | BP | 0.1 | / | 92 | 93 |
| Embodiment 5-2 | FP | 3 | / | 93 | 93 |
| Embodiment 5-3 | BP+CHB | 2+1 | / | 94 | 95 |
| Embodiment 5-4 | / | / | 0.1 | 94 | 92 |
| Embodiment 5-5 | / | / | 5 | 93 | 92 |
| Embodiment 5-6 | FP | 2 | 3 | 96 | 95 |
| Note: "/" in Table 5 indicates nonexistence of the corresponding preparation parameter or material. | | | | | |

Types and content of components in the electrolytic solution of the electrochemical device generally affect the performance, such as cycle performance and storage performance, of the electrochemical device. As can be seen from Embodiment 1-4 and Embodiments 5-1 to 5-3, when the electrolytic solution includes a benzene-containing compound and the type and weight percentage thereof fall with the range specified herein, the obtained electrochemical device achieves both higher cycle performance and higher storage performance. As can be seen from Embodiment 1-4, Embodiment 5-4, and Embodiment 5-5, when the electrolytic solution includes PS and the weight percentage thereof falls with the range specified herein, the obtained electrochemical device achieves both higher cycle performance and higher storage performance. As can be seen from Embodiment 1-4 and Embodiment 5-6, the benzene-containing compound and the PS are well stackable, thereby further improving the cycle performance and storage performance of the electrochemical device.

What is described above is merely preferred embodiments of this application, but is not intended to limit this application. Any modifications, equivalent substitutions, and improvements made within the spirit and principles of this application still fall within the protection scope of this application.

**Claims**

1. A positive active material, comprising an element Mn and an element Al, wherein a positive active material particle comprises a first region close to a surface of the positive active material particle and a second region away from the surface of the positive active material particle, a molar ratio between Al and Mn in the first region is a1, the molar ratio between Al and Mn in the second region is a2, $1.1 \leq a1/a2 \leq 100$.

2. The positive active material according to claim 1, wherein a1 is 1% to 30%, and/or a2 is 0.05% to 5%.

3. The positive active material according to claim 1, wherein, based on a mass of the positive active material, a mass percentage of Al in the first region is 0.01% to 0.5%.

4. The positive active material according to claim 1, wherein the positive active material is selected from lithium manganese oxide containing the element Al.

5. The positive active material according to claim 1, wherein the positive active material satisfies at least one of conditions (a) to (c):

   (a) the molar ratio between Al and Mn in the positive active material is 0.1% to 10%;
   (b) the element Mn comprises $Mn^{3+}$ and $Mn^{4+}$, and a ratio e of the molar ratio between $Mn^{3+}$ and $Mn^{4+}$ in the first region to the molar ratio between $Mn^{3+}$ and $Mn^{4+}$ in the second region is 0.80 to 0.95; or
   (c) the positive active material comprises Li, a molar ratio between Li and Mn in the first region is b1, a molar ratio between Li and Mn in the second region is b2, $1 \leq b1/b2 \leq 2$.

6. The positive active material according to claim 1, further comprising an element M1, wherein the element M1 comprises at least one of Ni, Co, Nb, Mo, V, W, Zr, Mg, Ti, La, Y, or B, the positive active material satisfies at least one of conditions (d) or (e):

   (d) a molar ratio between M1 and Mn is 0.1% to 5%; or
   (e) a molar ratio between Al and M1 is 1 to 10.

7. The positive active material according to claim 1, further comprising an element M2, wherein the element M2 comprises F and/or S, and, based on a mass of the positive active material, a mass percentage of the element M2 is 0.1% to 2%.

8. The positive active material according to claim 7, wherein the element M2 comprises an element F, a molar ratio between F and Mn in the first region is d1, a molar ratio between F and Mn in the second region is d2, $3 \leq d1/d2 \leq 50$.

9. The positive active material according to claim 1, further comprising an element Nb, wherein a molar ratio between Nb and Mn in the first region is c1, a molar ratio between Nb and Mn in the second region is c2, $3 \leq c1/c2 \leq 50$.

10. The positive active material according to claim 1, wherein $D_{v99}$ of the positive active material is 15 $\mu$m to 50 $\mu$m, and a particle size of the positive active material satisfies at least one of conditions (i) to (ii):

(i) 5 $\mu$m $\leq$ D$_{v90}$ $\leq$ 30 $\mu$m, and 5 $\mu$m $<$ D$_{v99}$ - D$_{v90}$ $\leq$ 21 $\mu$m; or

(ii) 2 $\mu$m $\leq$ D$_{v10}$ $\leq$ 10 $\mu$m, 1 $\leq$ (D$_{v99}$ - D$_{v10}$)/D$_{v50}$ $\leq$ 4.

11. The positive active material according to any one of claims 1 to 10, wherein the positive active material satisfies at least one of the following conditions:

(f)

$$5 \leq a1/a2 \leq 90;$$

(g)

$$a1 \text{ is } 5\% \text{ to } 30\%;$$

(h) the molar ratio between Al and Mn in the positive active material is 2% to 10%;

(i)

$$1.1 \leq b1/b2 \leq 2;$$

(j)

$$3 \leq d1/d2 \leq 25;$$

(k) D$_{v99}$ of the positive active material is 25 $\mu$m to 35 $\mu$m;

(l) a particle size of the positive active material satisfies 8 $\mu$m $\leq$ (D$_{v99}$ - D$_{v90}$) $\leq$ 12 $\mu$m; or

(m) the particle size of the positive active material satisfies 4 $\mu$m $<$ D$_{v10}$ $\leq$ 7 $\mu$m, and 2 $\leq$ (D$_{v99}$ - D$_{v10}$)/D$_{v50}$ $\leq$ 3.

12. An electrochemical device, comprising a positive electrode, a negative electrode, and an electrolytic solution, wherein the positive electrode comprises the positive active material according to any one of claims 1 to 11, the positive electrode comprises a positive material layer and a positive current collector, the positive material layer comprises a first positive material layer and a second positive material layer, the first positive material layer is located between the second positive material layer and the positive current collector, and a content of an element Mn in the first positive material layer is higher than the content of the element Mn in the second positive material layer.

13. The electrochemical device according to claim 12, wherein, based on a mass of the electrolytic solution, the electrolytic solution satisfies at least one of conditions (iii) to (v):

(iii) the electrolytic solution comprises a chain carbonate, a mass percentage of the chain carbonate is 20% to 60%, and the chain carbonate comprises at least one of dimethyl carbonate, diethyl carbonate, dipropyl carbonate, methyl propyl carbonate, ethylene propyl carbonate, or ethyl methyl carbonate;

(iv) the electrolytic solution comprises a benzene-containing compound, a mass percentage of the benzene-containing compound is 0.01% to 5%, and the benzene-containing compound comprises at least one of biphenyl, fluorobenzene, or cyclohexylbenzene; or

(v) the electrolytic solution comprises polystyrene, and a mass percentage of the polystyrene is 0.01% to 5%.

14. The electrochemical device according to claim 13, wherein the electrochemical device satisfies at least one of the following conditions:

(x) based on the mass of the electrolytic solution, the mass percentage of the benzene-containing compound is 1% to 3%; or

(xi) based on the mass of the electrolytic solution, the mass percentage of the polystyrene is 0.01% to 3%.

15. The electrochemical device according to claim 12, wherein the negative electrode comprises a negative material layer, the negative material layer comprises a negative active material, the negative active material comprises at least one of natural graphite, artificial graphite, or hard carbon, and the electrochemical device satisfies at least one of conditions (vi) to (ix):

(vi) a particle size of the negative active material satisfies $2 \, \mu m \leq D_{v10} \leq 10 \, \mu m$;
(vii) the particle size of the negative active material satisfies $5 \, \mu m < D_{v90} \leq 20 \, \mu m$, and $5 \, \mu m \leq D_{v99} - D_{v90} \leq 25 \, \mu m$;
(viii) a value of an orientation index of the negative active material is 5 to 30; or
(ix) a graphitization degree of the negative active material is 92% to 96%.

16. The electrochemical device according to claim 12, wherein the electrochemical device comprises a separator, and an initial exothermic temperature of the separator measured by differential scanning calorimetry is 138 °C to 145 °C.

17. An electronic device, comprising the electrochemical device according to any one of claims 12 to 16.

FIG. 1

## INTERNATIONAL SEARCH REPORT

| International application No. |
|---|
| **PCT/CN2022/074938** |

| A. | CLASSIFICATION OF SUBJECT MATTER |
|---|---|
| | H01M 4/505(2010.01)i; H01M 4/36(2006.01)i |

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, WPABSC, ENTXTC, VEN, ENTXT, DWPI, CNKI, CJFD: 正极, 阴极, AL, 铝, Mn, 锰, 区域, 核, 壳, 内, 外, 表, 里, 富铝, 富集, 梯度; positive electrode, cathode, aluminum, manganese, area, core, shell, surface, rich, concentration, gradient

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 102683667 A (NINGBO INSTITUTE OF MATERIAL TECHNOLOGY AND ENGINEERING, CHINESE ACADEMY OF SCIENCES) 19 September 2012 (2012-09-19) description, paragraphs 39-113 | 1-17 |
| A | CN 102646826 A (GANSU ELEPHANT ENERGY TECHNOLOGY CO., LTD.) 22 August 2012 (2012-08-22) entire document | 1-17 |
| A | CN 110720152 A (PANASONIC INTELLECTUAL PROPERTY MANAGEMENT CO., LTD.) 21 January 2020 (2020-01-21) entire document | 1-17 |
| A | JP 2010044963 A (SUMITOMO METAL MINING CO., LTD. et al) 25 February 2010 (2010-02-25) entire document | 1-17 |
| A | CN 103915610 A (SAMSUNG SDI CO., LTD. et al.) 09 July 2014 (2014-07-09) entire document | 1-17 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 July 2022** | **02 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/074938**

| Patent document cited in search report | | | Publication date (day/month/year) | Patent family member(s) | | | Publication date (day/month/year) |
|---|---|---|---|---|---|---|---|
| CN | 102683667 | A | 19 September 2012 | CN | 102683667 | B | 29 April 2015 |
| CN | 102646826 | A | 22 August 2012 | CN | 102646826 | B | 04 February 2015 |
| CN | 110720152 | A | 21 January 2020 | US | 2020235377 | A1 | 23 July 2020 |
| | | | | WO | 2019021806 | A1 | 31 January 2019 |
| | | | | JPWO | 2019021806 | S | 28 May 2020 |
| JP | 2010044963 | A | 25 February 2010 | JP | 6975700 | B2 | 01 December 2021 |
| CN | 103915610 | A | 09 July 2014 | US | 2014193714 | A1 | 10 July 2014 |
| | | | | KR | 20140089851 | A | 16 July 2014 |
| | | | | JP | 2014132572 | A | 17 July 2014 |
| | | | | US | 9620771 | B2 | 11 April 2017 |
| | | | | CN | 103915610 | B | 12 January 2018 |
| | | | | JP | 6342161 | B2 | 13 June 2018 |
| | | | | KR | 102007411 | B1 | 01 October 2019 |

Form PCT/ISA/210 (patent family annex) (January 2015)